# EUROPEAN PATENT SPECIFICATION

(11) **EP 4 467 359 B1**
(45) Date of publication and mention of the grant of the patent: **29.04.2026**
(21) Application number: 22921600.7
(22) Date of filing: 09.11.2022
(51) Int. Cl.: B60C 7/08, B60C 7/10, B60C 7/12

(54) **AIRLESS TIRE**
LUFTLOSER REIFEN
PNEU SANS AIR

(30) Priority: 20.01.2022 CN 202210068677
(43) Date of publication of application: 27.11.2024
(73) Proprietor: Shenzhen Daorui Tire Co., Ltd, Shenzhen, Guangdong 518000 (CN)
(72) Inventor: YU, Qiansun, Shenzhen, Guangdong 518000 (CN); CHEN, Dade, Shenzhen, Guangdong 518000 (CN)
(74) Representative: Zaboliene, Reda
(86) International application number: PCT/CN2022/130878
(87) International publication number: WO 2023/138176

(56) References cited:
- CN-A- 1 651 271
- CN-A- 107 571 689
- CN-A- 110 978 892
- CN-A- 111 409 395
- CN-A- 114 312 151
- CN-U- 213 007 410
- CN-U- 213 383 746
- CN-U- 215 096 815
- CN-Y- 2 465 962
- GB-A- 191 102 998
- US-A1- 2015 136 286
- US-A1- 2020 139 763

## Description

### FIELD OF TECHNOLOGY

The present invention relates to the technical field of tire manufacturing, and in particular to a non-pneumatic tire.

### BACKGROUND

Document CN213007410U discloses an arc-shaped non-pneumatic tire comprising a tread, a hollow inner ring, and concentric ellipsoid layers of multiple hollow ellipsoids whose long axes are parallel to the tread axial line. Adjacent ellipsoids intersect to form axial through holes of circular or elliptical cross section, with reinforcing ribs and first vents at the contact points. A connecting bridge arches toward and integrates with the tread, forming arc-shaped inclined surfaces and recessed corrugated structures. The tread further includes symmetrically arranged first and second grooves corresponding to the connecting bridges, providing a defined structural configuration.

Tire is a generic term. The tires, usually made of wear rubber materials, can be divided into a pneumatic tire and a solid tire. Sufficient gas can provide a comfortable support in a sealed rubber tire cavity. The disadvantage of the pneumatic tire is that the rubber material of a tread is easy to wear, and there is a possibility of tire burst because of the pneumatic support. Although the solid tire does not need to be inflated and has no possibility of tire burst and has high load-bearing capacity, the solid tire lacks air as a buffer, which causes poor driving comfort of a vehicle. Therefore, there is an urgent need for a non-pneumatic tire, which can not only keep an original solid tire flat-free, but also has good load-bearing capacity and road driving comfort.

### SUMMARY

In view of this, to overcome the defects existing in prior art, the present invention mainly aims at providing a non-pneumatic tire, by means of which, a wall thickness of the tire is increased, and a plurality of load-bearing units are formed by arranging a plurality of groups of bulges between a tread and an inner ring, thereby improving the overall load-bearing capacity, the impact resistance and the driving comfort of the tire.

To achieve the purposes above, the present invention adopts the following technical solution.

A non-pneumatic tire, including a tread and an inner ring with a common circle center, and a plurality of groups of bulges radially and integrally connected between the tread and the inner ring with the center of the tread and the inner ring as a center, where the plurality of groups of bulges are radially distributed between the tread and the inner ring, each group of bulges is hollowed out inside, and adjacent groups of bulges are integrally connected to form an annular cavity which runs through the plurality of groups of bulges and surrounds between the tread and the inner ring; a depression is formed at a connection position of the adjacent groups of bulges, the depressions form a tightening inner brim corresponding to an inner wall of the annular cavity, a top contour of an inner wall of each group of bulges correspondingly forms an expanding outer brim of the annular cavity, and a bulge wall of each group of bulges forms an arc-shaped extension surface integrally connected between the tightening inner brim and the expanding outer brim; and a tire wall connected between the tread and the inner ring is formed between the tightening inner brims of the annular cavities and the tops of the outer walls of the bulges, which tire wall includes an outer (a first) side tire wall connected between the tread and an outer side rim of the inner ring and an inner (a second) side tire wall connected between the tread and an inner side rim of the inner ring. Protrusions for elastic contact with the hub are disposed at an inner side wall of the inner ring.

As a preferred solution, a first pressure-bearing unit is at a connection part between the bulges at a top of each group of bulges and the tread when the tire is loaded, the arc-shaped extension surface is a second pressure-bearing unit, the tightening inner brim is a third pressure-bearing unit; and the first pressure-bearing unit, the second pressure-bearing unit and the third pressure-bearing unit are integrally connected from outside to inside.

As a preferred solution, each group of bulges is symmetrically distributed on two sides of the tread and the inner ring with a central plane of the tread and the inner ring perpendicular to an axial direction as a center, and the adjacent bulges located on a same side of the central plane are connected in a run-through manner in a radial direction of the tread and the inner ring.

As a preferred solution, the outer wall of each bulge is spherical.

As a preferred solution, a cross section of the tightening inner brim is in a closed ring shape.

As a preferred solution, a plurality of the protrusions are disposed at the inner side wall of the inner ring at intervals along a circumferential direction of the inner ring, and unloading grooves are formed between adjacent protrusions and facilitate stretching the tire for rapid assembly when assembling the tire and the hub.

As a preferred solution, a first contact part for cooperating with a rim of the hub and a second contact part for contacting with a wall of a hub groove are disposed on either side of the protrusion of the inner ring, along a width direction of the inner ring, the first contact part and the second contact part are connected in a stepped manner, and the first contact part is located on an outer side of the second contact part.

As a preferred solution, the tread is arc-shaped along a width direction of the tread, and sipes respectively extend to the two sides of the tread at a middle position of the tread.

As a preferred solution, a first air hole for forming air convection with the hub is formed in the inner ring.

As a preferred solution, the outer side tire wall and the inner side tire wall are respectively provided with second air holes, and the second air holes in the outer side tire wall and the second air holes in the inner side tire wall are symmetrical or asymmetrical with each other.

As a preferred solution, a depth of the sipe gradually decreases from edges of the two side of the tread to the middle position of the tread.

As a preferred solution, a thickness of a depression central region of the depression is 2-7 times a wall thickness of the bulge.

As a preferred solution, each group of bulges includes four bulges, the four bulges are pairwise symmetrically distributed on the two sides of the tread and the inner ring with a central plane of the tread and the inner ring perpendicular to an axial direction as a center, and the two adjacent bulges located on a same side of the central plane are connected in a run-through manner in a radial direction of the tread and the inner ring.

As a preferred solution, the protrusion is spherical, semi-spherical or ellipsoidal, and a surface of the protrusion that contacts the hub of a wheel is flat or spherical.

Compared with the prior art, the present invention has obvious advantages and beneficial effects. Specifically, according to the technical solution, it can be known that the plurality of groups of mutually connected bulges are radially distributed between the tread and the inner ring, and the plurality of groups of bulges form a concave-convex structure on the outer side wall of the tire, and form inside a load-bearing structure with the tightening inner brim, the expanding outer brim and the arc-shaped extension surface as load-bearing units; the concave-convex design increases the width of the tire wall of the tire and the load-bearing area of the tire wall of the tire, so that the overall load-bearing capacity of the tire is enhanced; moreover, the depression in the tire wall can provide a strong supporting point for the tire when the tire is deformed under pressure, so that the load-bearing capacity and the impact resistance of the tire are further improved; and the internal load-bearing structure with multiple load-bearing units has high force transmission speed and high elastic deformation acceleration, which can provide enough elastic support when the tire is compressed and improve the driving comfort.

To more clearly illustrate the structural features and effects of the present invention, the following detailed description is given with reference to the accompanying drawings and specific embodiments.

### BRIEF DESCRIPTION OF THE DRAWINGS

FIG. 1 is a perspective view of a tire of the present invention;
FIG. 2 is a schematic plan view of the tire of the present invention;
FIG. 3 is a schematic sectional view taken at A-A of FIG. 2;
FIG. 4 is a perspective view of a cross section taken along B-B of FIG. 2 from a first perspective;
FIG. 5 is a perspective view of the cross section taken along B-B of FIG. 2 from a second perspective;
FIG. 6 is a perspective view of the cross section taken along B-B of FIG. 2 from a third perspective;
FIG. 7 is a perspective view of the cross section taken along B-B of FIG. 2 from a fourth perspective; and
FIG. 8 is a schematic diagram of the cooperation between the tire and a hub of the present invention.

Description of numeral references:
10. tread; 11. sipe; 12. tread middle part; 20. inner ring; 21. protrusion; 22. unloading groove; 23. first contact part; 24. second contact part; 25. first air hole; 30. bulge; 40. annular cavity; 41. tightening inner brim; 42. expanding outer brim; 43. arc-shaped extension surface; 50. depression; 51. depression central region; 60. tire wall; 61. outer side tire wall; 62. inner side tire wall; 63. second air hole; 70. first pressure-bearing unit; 80. second pressure-bearing unit; 90. third pressure-bearing unit; 100. hub; a. axial direction; b. central plane; c. width direction.

### DESCRIPTION OF THE EMBODIMENTS

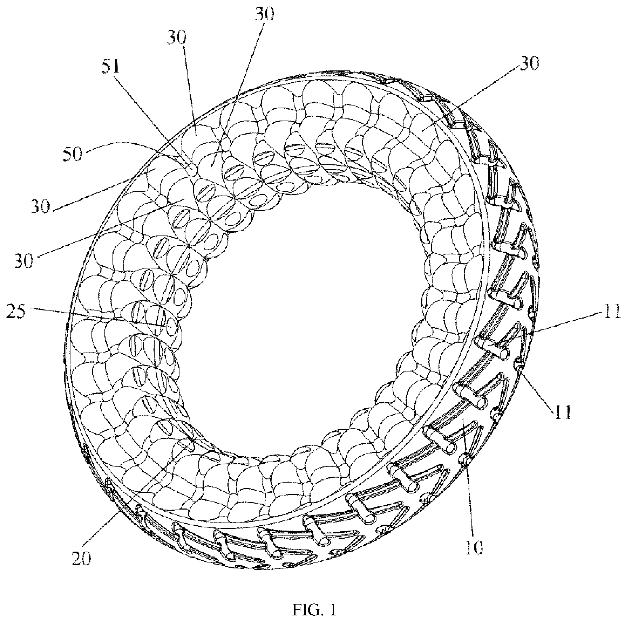

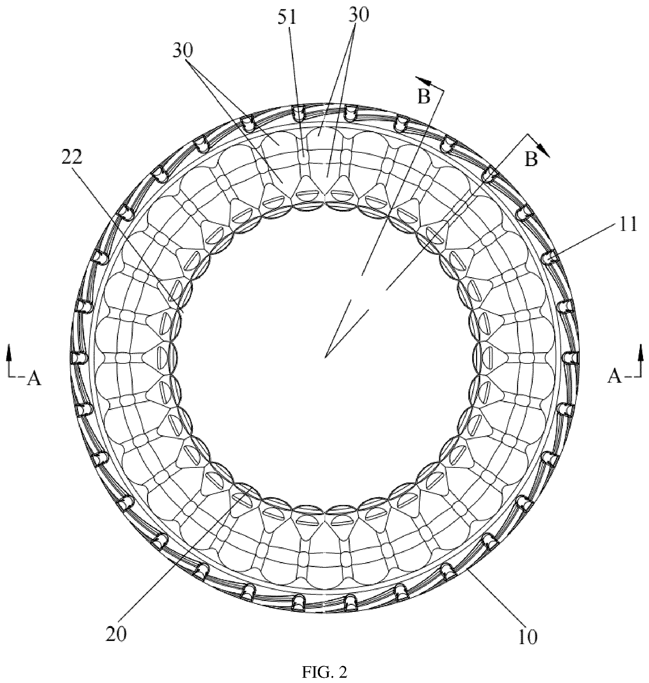

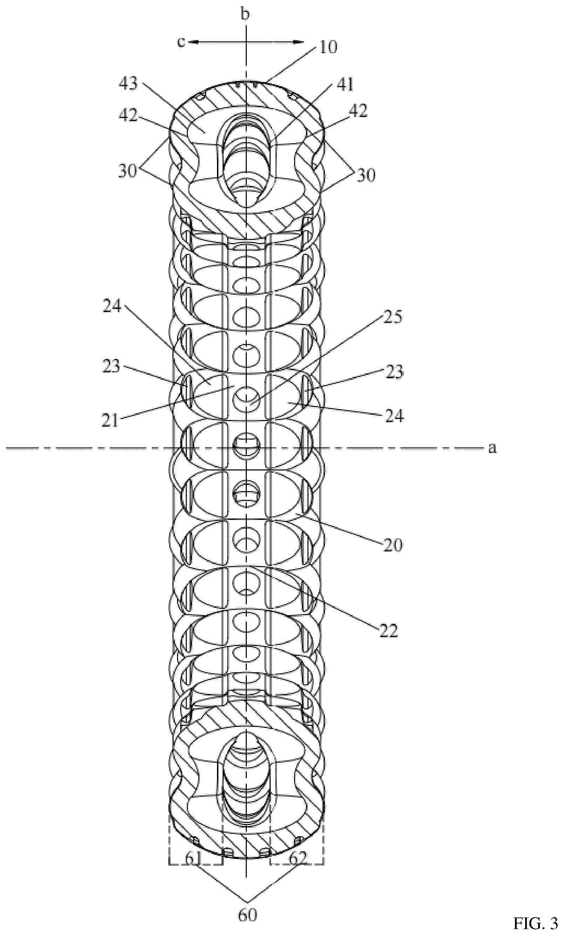

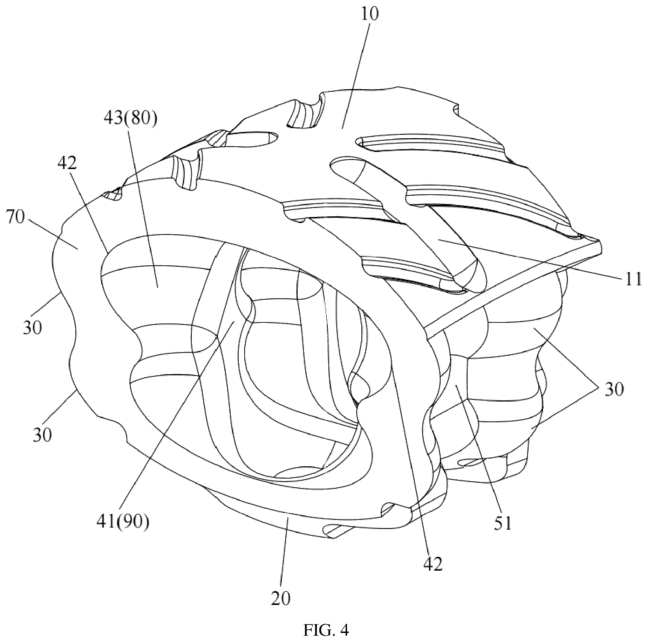

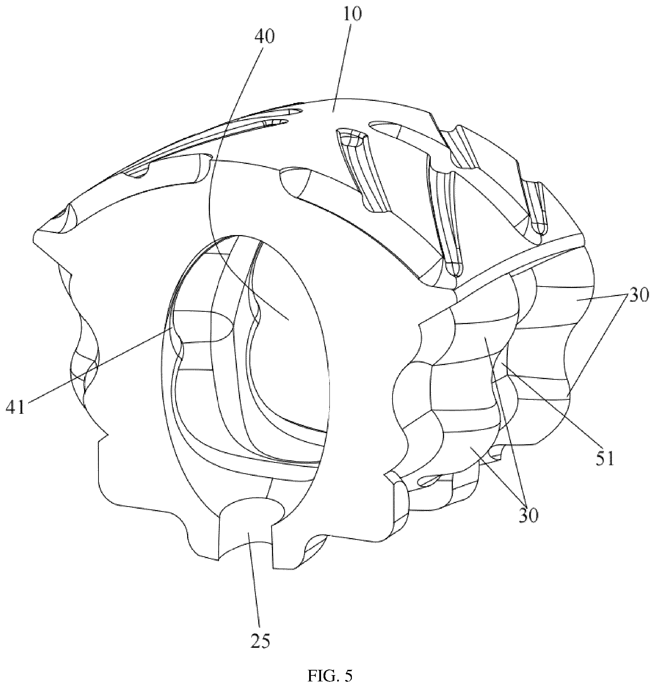

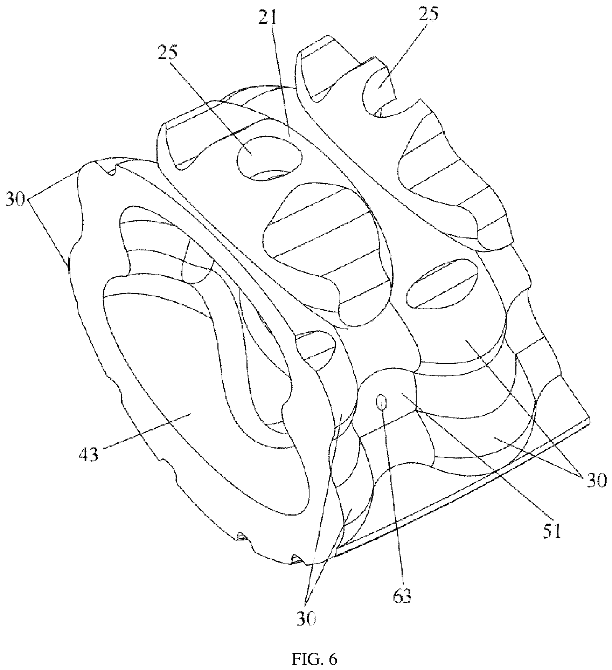

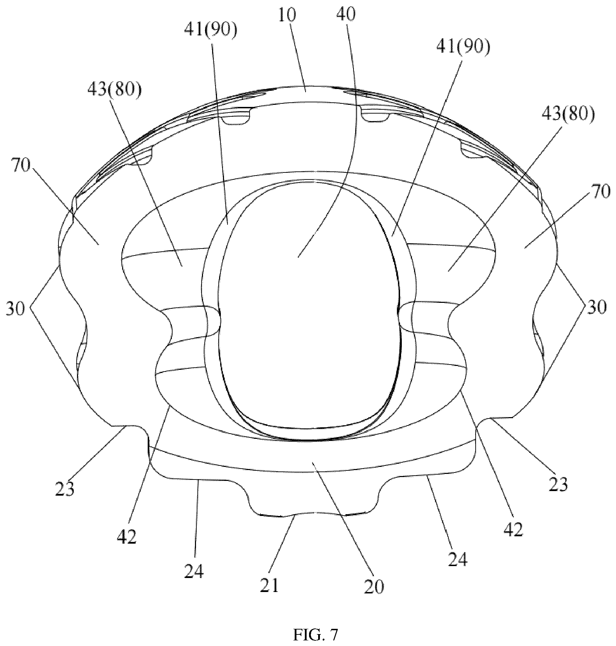

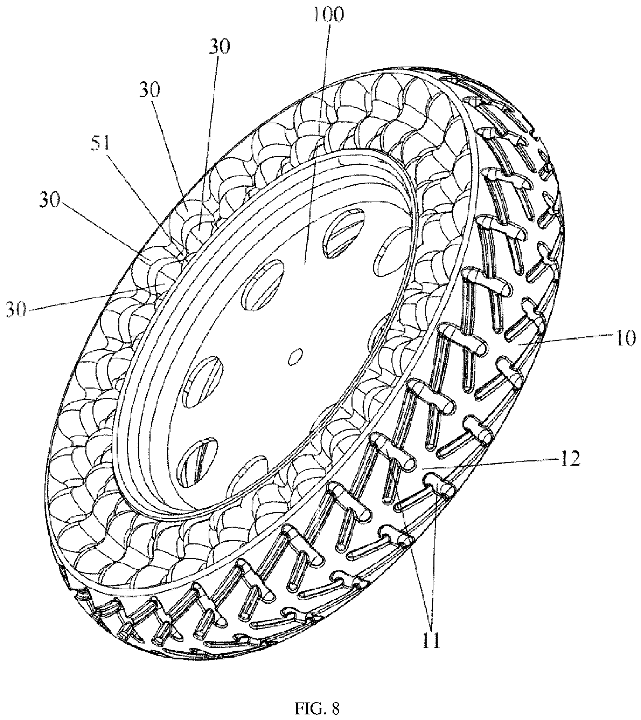

As shown in FIGS. 1 to 8, the present invention discloses a non-pneumatic tire, including a tread 10 and an inner ring 20 with a common circle center, and a plurality of groups of bulges 30 radially and integrally connected between the tread 10 and the inner ring 20 with the center of the tread 10 and the inner ring 20 as a center, where,
the tire is a hand cart tire mainly applied to tools such as an electric motorcycle, a motorcycle, a bicycle, a scooter and a tricycle, and can also be applied to a compact car; the tire is made of an elastic material, preferably polyurethane, rubber and plastics.

The tread 10 is a surface that contacts the ground during the running of the tire, and the tread 10 is designed in an arc shape along a width direction c of the tread, and the arc design is mainly used for a turning operation of a two-wheeled vehicle. A position of the tread 10 closer to an edge has much greater thickness than other positions of the tread. With respect to the positions with greater thicknesses, when the tread 10 is stressed, a middle position of the tread 10 is first stressed and deformed, while the edge of the tread 10 is not easy to deform due to its thickness, which easily causes jolts. Sipes 11 are formed at the edge positions with greater thicknesses, and a depth of each sipe 11 is set to gradually decrease from the edge to a tread middle part 12 (it may also be the same depth), so that the cushioning performance of the tire when stressed is improved and the comfort is improved when the tread 10 touches the ground.

The inner ring 20 is an annular structure which is tightly matched with the hub 100 of the vehicle, and protrusions 21 for elastic contact with the hub 100 are disposed at an inner side wall of the inner ring 20; in this embodiment, a plurality of protrusions 21 are disposed at the inner side wall of the inner ring 20 at intervals along a circumferential direction of the inner ring 20, and an unloading groove 22 is formed between every two adjacent protrusions 21. When the tire and the hub are assembled, it is necessary to stretch the tire so that the tire can be elastically deformed and sleeve the hub, thereby achieving rapid assembly of the tire and the hub 100. The unloading grooves 22 are mainly used to provide a deformation space in this assembly process for unloading an internal stress during tire stretching, so as to improve the ease and convenience of the assembly of the tire and the hub 100.

A first contact part 23 for cooperating with a rim of the hub 100 and a second contact part 24 for contacting with a wall of a hub groove are disposed on either side of the protrusion 21 of the inner ring 20, along the width direction c of the inner ring 20, the first contact part 23 and the second contact part 24 are connected in a stepped manner, and the first contact part 23 is located on an outer side of the second contact part 24. Moreover, the protrusion 21 and the first contact parts 23 and the second contact parts 24 on the two sides of the protrusion are distributed side by side along the width direction c of the inner ring 20. The purpose of adopting the protrusion 21 and the plurality of contact parts is to allow the inner ring 20 to be more closely combined with the hub, and at the same time to achieve cushioning elasticity between the tire and the hub; it should be noted that the number of the projection 21 and the contact parts which are distributed side by side can be set according to actual needs. In this embodiment, a total of five parts, namely, the protrusion 21 disposed in the middle and the first contact parts 23 and the second contact parts 24 disposed on the two sides of the protrusion, are adopted, and at least one or two of the five parts are in elastic contact with an inner wall of the hub groove. Moreover, a shape of the protrusion 21 may be spherical, semi-spherical or ellipsoidal, and a surface of the protrusion 21 that contacts with the hub is flat or spherical. In addition, the first contact parts 23 on the two sides are mainly used to form a close fit with rims of the two sides of the hub, and the second contact parts 24 on the two sides are mainly used to fill a gap between the protrusion 21 and the inner wall of the hub groove to achieve full adhesion between the tire and the hub, so as to improve the tightness and fastening of the combination of the tire and the hub, increase a friction force between the tire and the hub, prevent the tire from slipping and being separated from the hub due to greater torsion during the running of the wheel, and prolong the service life of the tire. Meanwhile, the protrusion 21 and the plurality of contact parts are in elastic contact with the hub, which can improve the overall elasticity of the tire, further reduce and filter out rigid vibration caused by road conditions, and improve the riding comfort.

In addition, a first air hole 25 for forming air convection with the hub is formed in a surface of the inner ring 20 that contacts with the hub. In this embodiment, the first air hole 25 may be formed in the protrusion 21, or between the protrusion 21 and the second contact part 24, between the first contact part 23 and the second contact part 24, or between two adjacent protrusions 21 along the circumferential direction of the inner ring 20; meanwhile, the matched hub is also provided with vent holes at intervals to cooperate with the first air holes 25 on the tire to form air convection among the tire, the hub and the outside, so as to dissipate hot air inside the tire, reduce heat generated by material accumulation inside the tire, and prolong the service life of the tire.

The plurality of groups of bulges 30 are radially distributed between the tread 10 and the inner ring 20; each group of bulges 30 is symmetrically distributed on the two sides of the tread 10 and the inner ring 20 with a central plane b of the tread 10 and the inner ring 20 perpendicular to an axial direction a as the center; it should be noted that each group of bulges 30 may also be asymmetrically disposed on the two sides of the central plane b (the two sides of the tread 10 and the inner ring 20) as required; and each group of bulges 30 is hollowed out inside, and two adjacent groups of bulges 30 are integrally connected to form an annular cavity 40 which runs through the groups of bulges 30 and surrounds between the tread 10 and the inner ring 20. Each group of bulges 30 has four bulges 30, the four bulges 30 are pairwise symmetrically distributed on the two sides of the central plane b of the tread 10 and the inner ring 20 perpendicular to the axial direction, the two bulges 30 located on a same side of the central plane b are connected in a run-through manner in a radial direction of the tread 10 and the inner ring 20, and the outer wall of each bulge 30 is in a spherical shape or other convex shapes. A depression 50 is formed at a connection position of two adjacent groups of bulges 30 (a thickness of a depression central region 51 is 2-7 times of a wall thickness of the bulge 30, the purpose of designing the thicker depression central region 51 is to make the depression central region form a strong supporting point for elastic deformation of the tire under pressure and to improve the overall load-bearing capacity and the impact resistance of the tire), and the depression 50 forms a tightening inner brim 41 corresponding to an inner wall of the annular cavity 40 (a cross section of the tightening inner brim 41 is in a closed ring shape, such as an ellipse and a peanut shell shape), and a position of the tightening inner brim 41 corresponding to the depression central region 51 may be a plane, and may also in a form of the plane and an arc combined. A top contour of an inner wall of each group of bulges 30 correspondingly forms an expanding outer brim 42 of the annular cavity 40 and a bulge wall of each group of bulges 30 forms an arc-shaped extension surface 43 integrally connected between the tightening inner brim 41 and the expanding outer brim 42; it should be noted that the smaller the cross-sectional area (a cross section along a width direction c of the tire) of the tightening inner brim 41, the larger the area of the arc-shaped extension surface 43, correspondingly, the greater a thickness of a tire wall 60 described below, the larger an area of a load-bearing unit that can support a pressure load of the tire, and the higher the supporting performance of the tire, so that the overall load-bearing performance of the tire is higher.

The sipe 11 disposed on the tread 10 can be used as both a drainage groove and a functional groove of the tire; specifically, a position of the sipe 11 corresponds to a position where the bulge 30 is located, and when the bulge 30 is elastically deformed under pressure, the sipe 11 can be used as an unloading groove for unloading a deformation stress of the bulge 30, so that the deformation stress of the bulge 30 can be quickly removed when the tire is running, the influence on the driving experience during the elastic deformation of the tire is reduced and the driving comfort is improved.

A concave-convex (a plurality of bulges 30 and depressions 50 combined) tire wall 60 connected between the tread 10 and the inner ring 20 is formed between the tightening inner brim 41 of the annular cavity 40 and the top of the outer wall of the bulge 30, and the tire wall 60 includes an outer side tire wall 61 connected between the tread 10 and an outer side rim of the inner ring 20 and an inner side tire wall 62 connected between the tread 10 and an inner side rim of the inner ring 20.

A first pressure-bearing unit 70 is at a connection part between the bulges 30 at a top of each group of bulges 30 and the tread 10 when the tire is loaded, the arc-shaped extension surface 43 is a second pressure-bearing unit 80, the tightening inner brim 41 is a third pressure-bearing unit 90; and the first pressure-bearing unit 70, the second pressure-bearing unit 80 and the third pressure-bearing unit 90 are integrally connected from outside to inside. The three pressure-bearing units transfer loads to each other and support each other elastically, so that greater elasticity and load-bearing capacity are formed. Moreover, by adopting the design of a plurality of arc-shaped extension surfaces 43, the thickness of the tire wall can be increased, the load-bearing area of the tire wall can be increased, and the load per unit area can be reduced, so that the overall load-bearing capacity of the tire can be improved. Therefore, the thickness of the tread 10 can be reduced under the same supporting strength, and the comfort of the tread 10 when it contacts the ground can be improved; meanwhile, the thickness of the tread 10 can be increased as needed to further improve the tire supporting strength. Moreover, the concave-convex design of the tire wall can improve the elasticity and rebound acceleration of the tire to adapt to different road conditions when the tire is running under a load; the plurality of depressions 50 on the tire wall 60 can form a plurality of supporting points, thereby further improving the overall load-bearing capacity and impact resistance of the tire. Compared with a honeycomb- and V-shaped through-type non-pneumatic tire, this tire has a concave-convex structure formed by the plurality of bulges that are integrally connected at the tire wall, and the bulges and the depressions strongly support each other to form a plurality of elastic supporting structures, so that the force transmission is faster, the rebound acceleration is high, the tire can adapt to various harsh road conditions, the overall load-bearing performance and the impact resistance of the tire are improved, and the driving experience is better. Moreover, a projected width of the tire wall of the tire in a wheel rotation direction (that is, a distance from an apex of the bulge outer wall to the tightening inner brim) is equivalent to 2-7 times a width of a tire wall of a traditional pneumatic tire of the same model, so that a load-bearing area of the tire wall of the tire is expanded, the overall structural strength of the tire is improved and the load-bearing capacity of the tire is further enhanced.

The outer side tire wall 61 and the inner side tire wall 62 are respectively provided with second air holes 63, and the second air holes 63 in the outer side tire wall 61 and the second air holes 63 in the inner side tire wall 62 are symmetrical or asymmetrical with each other. Specifically, the second air hole 63 is formed at a position of the depression 50 of the tire wall, and the second air hole 63 can cooperate with the first air hole 25 to achieve rapid air convection between the inside of the tire and outside air, so as to improve the emission efficiency of hot air inside the tire.

The number of the groups of bulges 30 of the tire is between 6 and 60, which can be designed according to actual needs. The tread 10, the inner ring 20 and the groups of bulges 30 of the tire are all integrally designed, so that the overall structure is stable.

When the hardness of the tire material is Shore 85, under a test by a dynamic tire durability tester: under the condition of carrying 150 KG load and passing through 5*5 (5 mm high and 5 mm wide) obstacle blocks, the tire runs continuously for 3000 kilometers at a speed of 40 kilometers per hour, and the tire has no damage.

The design focus of the present invention lies in that the plurality of groups of mutually connected bulges 30 are radially distributed between the tread 10 and the inner ring 20, and the plurality of groups of bulges 30 form a concave-convex structure on the outer side wall of the tire, and form inside a load-bearing structure with the tightening inner brim 41, the expanding outer brim 42 and the arc-shaped extension surface 43 as load-bearing units; the concave-convex design increases the width of the tire wall of the tire and the load-bearing area of the tire wall of the tire, so that the overall load-bearing capacity of the tire is enhanced; moreover, the depression 50 in the tire wall can provide a strong supporting point for the tire when the tire is deformed under pressure, so that the load-bearing capacity and the impact resistance of the tire are further improved; and the internal load-bearing structure with multiple load-bearing units has high force transmission speed and high elastic deformation acceleration, which can provide enough elastic support when the tire is compressed and improve the driving comfort.

## Claims

1. A non-pneumatic tire comprising a tread (10) and an inner ring (20) with a common circle center, and a plurality of groups of bulges (30) radially and integrally connected between the tread (10) and the inner ring (20) with the center of the tread (10) and the inner ring (20) as a center, wherein the plurality of groups of bulges (30) are radially distributed between the tread (10) and the inner ring (20), each group of bulges (30) is hollowed out inside, and adjacent groups of bulges (30) are integrally connected to form an annular cavity (40) which runs through the plurality of groups of bulges (30) and surrounds between the tread (10) and the inner ring (20); a depression (50) is formed at a connection position of the adjacent groups of bulges (30), the depressions (50) form a tightening inner brim (41) corresponding to an inner wall of the annular cavity (40), a top contour of an inner wall of each group of bulges (30) correspondingly forms an expanding outer brim (42) of the annular cavity (40), and a bulge (30) wall of each group of bulges (30) forms an arc-shaped extension surface (43) integrally connected between the tightening inner brim (41) and the expanding outer brim (42); and a tire wall (60) connected between the tread (10) and the inner ring (20) is formed between the tightening inner brims (41) of the annular cavities and the tops of the outer walls of the bulges (30), which tire wall (60) comprises a first side tire wall (61) connected between the tread (10) and an outer side rim of the inner ring (20) and a second side tire wall (62) connected between the tread (10) and an inner side rim of the inner ring (20), (10) **characterized in that**
protrusions (21) for elastic contact with the hub (100) are disposed at an inner side wall of the inner ring (20).

2. The non-pneumatic tire according to claim 1, wherein a first load-bearing unit (70) is at a connection part between the bulges (30) at a top of each group of bulges (30) and the tread (10) when the tire is loaded, the arc-shaped extension surface (43) is a second load-bearing unit (80), the tightening inner brim (41) is a third load-bearing unit (90); and the first load-bearing unit (70), the second load-bearing unit (80) and the third load-bearing unit (90) are integrally connected from outside to inside.

3. The non-pneumatic tire according to claim 1, wherein each group of bulges (30) is symmetrically distributed on two sides of the tread (10) and the inner ring (20) with the central plane of the tread (10) and the inner ring (20) perpendicular to an axial direction as a center, and the adjacent bulges (30) located on a same side of the central plane are connected in a run-through manner in a radial direction of the tread (10) and the inner ring (20).

4. The non-pneumatic tire according to claim 1, wherein the outer wall of each bulge (30) is spherical.

5. The non-pneumatic tire according to claim 1, wherein a cross section of the tightening inner brim (41) is in a closed ring shape.

6. The non-pneumatic tire according to claim 1, wherein a plurality of the protrusions (21) are disposed at the inner side wall of the inner ring (20) at intervals along a circumferential direction of the inner ring (20), and unloading grooves (22) are formed between adjacent protrusions (21) and facilitate stretching the tire for rapid assembly when assembling the tire and the hub (100).

7. The non-pneumatic tire according to claim 1, wherein a first contact part (23) for cooperating with a rim of the hub (100) and a second contact part (24) for contacting with a wall of a hub (100) groove are disposed on either side of the protrusion (21) of the inner ring (20), along a width direction of the inner ring (20), the first contact part (23) and the second contact part (24) are connected in a stepped manner, and the first contact part (23) is located on an outer side of the second contact part (24).

8. The non-pneumatic tire according to claim 1, wherein the tread (10) is arc-shaped along a width direction of the tread (10), and sipes (11) respectively extend to the two sides of the tread (10) at a middle position of the tread (10).

9. The non-pneumatic tire according to claim 1, wherein a first air hole (25) for forming air convection with the hub (100) is formed in the inner ring (20).

10. The non-pneumatic tire according to claim 9, wherein the first side tire wall (61) and the second side tire wall (62) are respectively provided with second air holes (63), and the second air holes (63) in the first side tire wall (61) and the second air holes (63) in the second side tire wall (62) are symmetrical or asymmetrical with each other.

11. The non-pneumatic tire according to claim 8, wherein a depth of the sipe (11) gradually decreases from edges of the two side of the tread (10) to the middle position of the tread (10).

12. The non-pneumatic tire according to claim 1, wherein a thickness of a depression central region (51) of the depression (50) is 2-7 times a wall thickness of the bulge (30).

13. The non-pneumatic tire according to claim 1, wherein each group of bulges (30) comprises four bulges (30), the four bulges (30) are pairwise symmetrically distributed on the two sides of the tread (10) and the inner ring (20) with a central plane of the tread (10) and the inner ring (20) perpendicular to an axial direction as a center, and the two adjacent bulges (30) located on a same side of the central plane are connected in a run-through manner in a radial direction of the tread (10) and the inner ring (20).

14. The non-pneumatic tire according to claim 1, wherein the protrusion (21) is spherical, semi-spherical or ellipsoidal, and a surface of the protrusion (21) that contacts the hub (100) of a wheel is flat or spherical.

## Patentansprüche

1. Ein luftloser Reifen, umfassend eine Lauffläche (10) und einen Innenring (20) mit einem gemeinsamen Kreismittelpunkt, und eine Mehrzahl von Gruppen von Ausbuchtungen (30), die radial und einstückig zwischen der Lauffläche (10) und dem Innenring (20) mit dem Zentrum der Lauffläche (10) und des Innenrings (20) als Zentrum verbunden sind, wobei die Mehrzahl von Gruppen von Ausbuchtungen (30) radial zwischen der Lauffläche (10) und dem Innenring (20) verteilt sind, jede Gruppe von Ausbuchtungen (30) innen ausgehöhlt ist und benachbarte Gruppen von Ausbuchtungen (30) einstückig miteinander verbunden sind, um einen ringförmigen Hohlraum (40) zu bilden, der durch die Mehrzahl von Gruppen von Ausbuchtungen (30) verläuft und den Bereich zwischen der Lauffläche (10) und dem Innenring (20) umgibt;
an einer Verbindungsposition der benachbarten Gruppen von Ausbuchtungen (30) eine Vertiefung (50) gebildet ist, die Vertiefungen (50) einen verengenden inneren Rand (41) bilden, der einer Innenwand des ringförmigen Hohlraums (40) entspricht, eine obere Kontur einer Innenwand jeder Gruppe von Ausbuchtungen (30) entsprechend einen sich erweiternden äußeren Rand (42) des ringförmigen Hohlraums (40) bildet, und eine Wand der Ausbuchtung (30) jeder Gruppe von Ausbuchtungen (30) eine bogenförmige Erstreckungsfläche (43) bildet, die einstückig zwischen dem verengenden inneren Rand (41) und dem sich erweiternden äußeren Rand (42) verbunden ist; und
eine Reifenwand (60), die zwischen der Lauffläche (10) und dem Innenring (20) verbunden ist, zwischen den verengenden inneren Rändern (41) der ringförmigen Hohlräume und den Oberseiten der Außenwände der Ausbuchtungen (30) gebildet ist, wobei diese Reifenwand (60) eine erste Seitenreifenwand (61), die zwischen der Lauffläche (10) und einem äußeren Seitenrand des Innenrings (20) verbunden ist, und eine zweite Seitenreifenwand (62), die zwischen der Lauffläche (10) und einem inneren Seitenrand des Innenrings (20) verbunden ist, umfasst (10), **dadurch gekennzeichnet, dass**
Vorsprünge (21) für einen elastischen Kontakt mit der Nabe (100) an einer inneren Seitenwand des Innenrings (20) angeordnet sind.

2. Der luftlose Reifen nach Anspruch 1, wobei sich eine erste lasttragende Einheit (70) an einem Verbindungsteil zwischen den Ausbuchtungen (30) an einer Oberseite jeder Gruppe von Ausbuchtungen (30) und der Lauffläche (10) befindet, wenn der Reifen belastet wird, die bogenförmige Erstreckungsfläche (43) eine zweite lasttragende Einheit (80) ist, der verengende innere Rand (41) eine dritte lasttragende Einheit (90) ist; und die erste lasttragende Einheit (70), die zweite lasttragende Einheit (80) und die dritte lasttragende Einheit (90) von außen nach innen einstückig miteinander verbunden sind.

3. Der luftlose Reifen nach Anspruch 1, wobei jede Gruppe von Ausbuchtungen (30) symmetrisch auf zwei Seiten der Lauffläche (10) und des Innenrings (20) verteilt ist, mit der Mittelebene der Lauffläche (10) und des Innenrings (20) senkrecht zu einer axialen Richtung als Zentrum, und die benachbarten Ausbuchtungen (30), die sich auf einer gleichen Seite der Mittelebene befinden, in einer radialen Richtung der Lauffläche (10) und des Innenrings (20) durchgehend miteinander verbunden sind.

4. Der luftlose Reifen nach Anspruch 1, wobei die Außenwand jeder Ausbuchtung (30) sphärisch ist.

5. Der luftlose Reifen nach Anspruch 1, wobei ein Querschnitt des verengenden inneren Randes (41) eine geschlossene Ringform aufweist.

6. Der luftlose Reifen nach Anspruch 1, wobei eine Mehrzahl der Vorsprünge (21) an der inneren Seitenwand des Innenrings (20) in Abständen entlang einer Umfangsrichtung des Innenrings (20) angeordnet ist, und Entlastungsnuten (22) zwischen benachbarten Vorsprüngen (21) ausgebildet sind und das Dehnen des Reifens für eine schnelle Montage beim Zusammenbau des Reifens und der Nabe (100) erleichtern.

7. Der luftlose Reifen nach Anspruch 1, wobei ein erster Kontaktteil (23) zum Zusammenwirken mit einer Felge der Nabe (100) und ein zweiter Kontaktteil (24) zum Kontaktieren mit einer Wand einer Nut der Nabe (100) auf jeder Seite des Vorsprungs (21) des Innenrings (20) angeordnet sind, entlang einer Breitenrichtung des Innenrings (20) der erste Kontaktteil (23) und der zweite Kontaktteil (24) stufenförmig verbunden sind, und der erste Kontaktteil (23) auf einer Außenseite des zweiten Kontaktteils (24) angeordnet ist.

8. Der luftlose Reifen nach Anspruch 1, wobei die Lauffläche (10) entlang einer Breitenrichtung der Lauffläche (10) bogenförmig ist und Lamellen (11) sich jeweils an einer mittleren Position der Lauffläche (10) zu den beiden Seiten der Lauffläche (10) erstrecken.

9. Der luftlose Reifen nach Anspruch 1, wobei ein erstes Luftloch (25) zur Bildung einer Luftkonvektion mit der Nabe (100) in dem Innenring (20) ausgebildet ist.

10. Der luftlose Reifen nach Anspruch 9, wobei die erste Seitenreifenwand (61) und die zweite Seitenreifenwand (62) jeweils mit zweiten Luftlöchern (63) versehen sind, und die zweiten Luftlöcher (63) in der ersten Seitenreifenwand (61) und die zweiten Luftlöcher (63) in der zweiten Seitenreifenwand (62) symmetrisch oder asymmetrisch zueinander sind.

11. Der luftlose Reifen nach Anspruch 8, wobei eine Tiefe der Lamelle (11) von Rändern der beiden Seiten der Lauffläche (10) zu der mittleren Position der Lauffläche (10) allmählich abnimmt.

12. Der luftlose Reifen nach Anspruch 1, wobei eine Dicke eines zentralen Vertiefungsbereichs (51) der Vertiefung (50) das 2- bis 7-fache einer Wanddicke der Ausbuchtung (30) beträgt.

13. Der luftlose Reifen nach Anspruch 1, wobei jede Gruppe von Ausbuchtungen (30) vier Ausbuchtungen (30) umfasst, die vier Ausbuchtungen (30) paarweise symmetrisch auf den beiden Seiten der Lauffläche (10) und des Innenrings (20) mit einer Mittelebene der Lauffläche (10) und des Innenrings (20) senkrecht zu einer axialen Richtung als Zentrum verteilt sind, und die beiden benachbarten Ausbuchtungen (30), die sich auf einer gleichen Seite der Mittelebene befinden, in einer radialen Richtung der Lauffläche (10) und des Innenrings (20) durchgehend miteinander verbunden sind.

14. Der luftlose Reifen nach Anspruch 1, wobei der Vorsprung (21) sphärisch, halbsphärisch oder ellipsoidal ist, und eine Oberfläche des Vorsprungs (21), die die Nabe (100) eines Rades kontaktiert, flach oder sphärisch ist.

## Revendications

1. Un pneu sans air comprenant une bande de roulement (10) et un anneau intérieur (20) ayant un centre de cercle commun, et une pluralité de groupes de renflements (30) reliés radialement et d'un seul tenant entre la bande de roulement (10) et l'anneau intérieur (20) avec le centre de la bande de roulement (10) et de l'anneau intérieur (20) comme centre, dans lequel la pluralité de groupes de renflements (30) sont répartis radialement entre la bande de roulement (10) et l'anneau intérieur (20), chaque groupe de renflements (30) est évidé à l'intérieur, et des groupes adjacents de renflements (30) sont reliés d'un seul tenant pour former une cavité annulaire (40) qui traverse la pluralité de groupes de renflements (30) et entoure l'espace entre la bande de roulement (10) et l'anneau intérieur (20); une dépression (50) est formée à une position de connexion des groupes adjacents de renflements (30), les dépressions (50) forment un bord intérieur de resserrement (41) correspondant à une paroi intérieure de la cavité annulaire (40), un contour supérieur d'une paroi intérieure de chaque groupe de renflements (30) forme de manière correspondante un bord extérieur d'évasement (42) de la cavité annulaire (40), et une paroi de renflement (30) de chaque groupe de renflements (30) forme une surface d'extension en forme d'arc (43) reliée d'un seul tenant entre le bord intérieur de resserrement (41) et le bord extérieur d'évasement (42); et un flanc de pneu (60) relié entre la bande de roulement (10) et l'anneau intérieur (20) est formé entre les bords intérieurs de resserrement (41) des cavités annulaires et les sommets des parois extérieures des renflements (30), lequel flanc de pneu (60) comprend un premier flanc de pneu latéral (61) relié entre la bande de roulement (10) et une jante latérale extérieure de l'anneau intérieur (20) et un second flanc de pneu latéral (62) relié entre la bande de roulement (10) et une jante latérale intérieure de l'anneau intérieur (20), (10) **caractérisé en ce que**
des protubérances (21) pour un contact élastique avec le moyeu (100) sont disposées au niveau d'une paroi latérale intérieure de l'anneau intérieur (20).

2. Le pneu sans air selon la revendication 1, dans lequel une première unité porteuse de charge (70) se trouve au niveau d'une partie de connexion entre les renflements (30) à un sommet de chaque groupe de renflements (30) et la bande de roulement (10) lorsque le pneu est chargé, la surface d'extension en forme d'arc (43) est une deuxième unité porteuse de charge (80), le bord intérieur de resserrement (41) est une troisième unité porteuse de charge (90); et la première unité porteuse de charge (70), la deuxième unité porteuse de charge (80) et la troisième unité porteuse de charge (90) sont reliées d'un seul tenant de l'extérieur vers l'intérieur.

3. Le pneu sans air selon la revendication 1, dans lequel chaque groupe de renflements (30) est réparti symétriquement sur deux côtés de la bande de roulement (10) et de l'anneau intérieur (20) avec le plan central de la bande de roulement (10) et de l'anneau intérieur (20) perpendiculaire à une direction axiale comme centre, et les renflements adjacents (30) situés sur un même côté du plan central sont reliés de manière traversante dans une direction radiale de la bande de roulement (10) et de l'anneau intérieur (20).

4. Le pneu sans air selon la revendication 1, dans lequel la paroi extérieure de chaque renflement (30) est sphérique.

5. Le pneu sans air selon la revendication 1, dans lequel une section transversale du bord intérieur de resserrement (41) est en forme d'anneau fermé.

6. Le pneu sans air selon la revendication 1, dans lequel une pluralité de protubérances (21) sont disposées au niveau de la paroi latérale intérieure de l'anneau intérieur (20) à des intervalles le long d'une direction circonférentielle de l'anneau intérieur (20), et des rainures de décharge (22) sont formées entre des protubérances adjacentes (21) et facilitent l'étirement du pneu pour un assemblage rapide lors de l'assemblage du pneu et du moyeu (100).

7. Le pneu sans air selon la revendication 1, dans lequel une première partie de contact (23) destinée à coopérer avec une jante du moyeu (100) et une seconde partie de contact (24) destinée à être en contact avec une paroi d'une rainure du moyeu (100) sont disposées de chaque côté de la protubérance (21) de l'anneau intérieur (20), le long d'une direction de largeur de l'anneau intérieur (20), la première partie de contact (23) et la seconde partie de contact (24) sont reliées en gradins, et la première partie de contact (23) est située sur un côté extérieur de la seconde partie de contact (24).

8. Le pneu sans air selon la revendication 1, dans lequel la bande de roulement (10) est en forme d'arc le long d'une direction de largeur de la bande de roulement (10), et des lamelles (11) s'étendent respectivement vers les deux côtés de la bande de roulement (10) au niveau d'une position médiane de la bande de roulement (10).

9. Le pneu sans air selon la revendication 1, dans lequel un premier trou d'air (25) pour former une convection d'air avec le moyeu (100) est formé dans l'anneau intérieur (20).

10. Le pneu sans air selon la revendication 9, dans lequel le premier flanc de pneu latéral (61) et le second flanc de pneu latéral (62) sont respectivement pourvus de seconds trous d'air (63), et les seconds trous d'air (63) dans le premier flanc de pneu latéral (61) et les seconds trous d'air (63) dans le second flanc de pneu latéral (62) sont symétriques ou asymétriques l'un par rapport à l'autre.

11. Le pneu sans air selon la revendication 8, dans lequel une profondeur de la lamelle (11) diminue progressivement depuis les bords des deux côtés de la bande de roulement (10) jusqu'à la position médiane de la bande de roulement (10).

12. Le pneu sans air selon la revendication 1, dans lequel une épaisseur d'une région centrale de dépression (51) de la dépression (50) est de 2 à 7 fois une épaisseur de paroi du renflement (30).

13. Le pneu sans air selon la revendication 1, dans lequel chaque groupe de renflements (30) comprend quatre renflements (30), les quatre renflements (30) sont répartis symétriquement par paires sur les deux côtés de la bande de roulement (10) et de l'anneau intérieur (20) avec un plan central de la bande de roulement (10) et de l'anneau intérieur (20) perpendiculaire à une direction axiale comme centre, et les deux renflements adjacents (30) situés sur un même côté du plan central sont reliés de manière traversante dans une direction radiale de la bande de roulement (10) et de l'anneau intérieur (20).

14. Le pneu sans air selon la revendication 1, dans lequel la protubérance (21) est sphérique, semi-sphérique ou ellipsoïdale, et une surface de la protubérance (21) qui est en contact avec le moyeu (100) d'une roue est plate ou sphérique.
